# EUROPÄISCHE PATENTANMELDUNG

(11) **EP 2 101 381 A2**
(43) Veröffentlichungstag der Anmeldung: **16.09.2009**
(21) Anmeldenummer: 09002969.5
(22) Anmeldetag: 03.03.2009
(51) Int. Cl.: H02G 3/04

(54) **Kabel- und Leitungsführungssystem für Energie, Daten, Luft und/oder Wasser zur Anbringung an Gebäudefassaden für die Sanierung oder den Umbau von Gebäuden**

(30) Priorität: 12.03.2008 DE 202008003544 U
(71) Anmelder: Tehalit GmbH, 67716 Heltersberg (DE)
(72) Erfinder: Schnurr, Richard, 66957 Vinningen (DE)
(74) Vertreter: Patentanwälte Möll, Bitterich & Dr. Keller

(57) **Zusammenfassung**

Die Erfindung betrifft Kabel- und Leitungsführungssysteme für Energie, Daten, Luft und/oder Wasser zur Anbringung an Gebäudefassaden für die Sanierung oder den Umbau von Gebäuden, umfassend ein U-förmiges Unterteil (10), bestehend aus einem Kanalboden (14) und zwei etwa im rechten Winkel dazu nach oben geneigten Seitenwänden (17) mit daran ausgebildeten Deckelhalteprofilen (23), einem zum Unterteil (10) passenden Deckel (20) mit seitlich ausgebildeten Formprofilen (22), welche mit den Deckelhalteprofilen (23) des Unterteils (10) kooperieren. Dabei bildet das Unterteil (10) einen ersten Kanalabschnitt (10.1) zur Aufnahme von Kabeln und/oder Leitungen (30). Auf den ersten Kanalabschnitt (10.1) ist wenigstens ein weiterer Kanalabschnitt (10.2) zur Aufnahme von Kabeln und/oder Leitungen (32) angeordnet, wobei der Kanalboden (15) des wenigstens zweiten Kanalabschnitts (10.2) zugleich den Deckel des ersten Kanalabschnitts (10.1) bildet und an den Seitenwänden (17) des wenigstens zweiten Kanalabschnitts (10.2) Formhalteprofile (26) ausgebildet sind, die mit den Deckelhalteprofilen (23) des ersten Kanalabschnitts (10.1) derart kooperieren, dass der erste Kanalabschnitt (10.1) und der wenigstens zweite Kanalabschnitt (10.2) zusammengehalten werden.

## Beschreibung

Die vorliegende Erfindung betrifft ein Kabel- und Leitungsführungssystem mit Versorgungsleitungen für Energie, Daten, Luft und/oder Wasser zur Anbringung an Gebäudefassaden für die Sanierung oder den Umbau von Gebäuden.

Die Sicherung und das Einsparen von Energie spielen in unserer heutigen Zeit eine immer wichtigere Rolle. Energieressourcen werden knapp, und auch im Wohnbaubereich wird es immer häufiger notwendig, das Gebäude auf einen minimalen Energieverbrauch zu optimieren. Bei einem Neubau entstehen hierbei wenig Probleme, da nach den aktuellen Standards gebaut werden kann, um ein energiewirtschaftlich günstiges Gebäude zu schaffen. Bei älteren Gebäuden ist dies jedoch nicht ohne Weiteres möglich. Diese müssen nachträglich im Rahmen einer Gebäudesanierung oder eines Umbaus auf die entsprechenden Energiestandards gebracht werden. Nicht immer ist es möglich, bestehende Installationen im Gebäudeinneren zu ersetzen.

Die Erfinder haben daher nach einer Lösung gesucht, mit der es möglich ist, die Sanierung und den Umbau eines Gebäudes von dessen Außenseite zu gestalten. Die Erfindung bietet hierfür ein Kabel- und Leitungsführungssystem an, das an einer Gebäudefassade zum Zweck der Gebäudesanierung oder des -umbaus angebracht werden kann. Ziel ist es, die unterschiedlichen Leitungsarten für Energie, Daten, Wasser und/oder Luft in einzelne, voneinander getrennte Kanalabschnitte unterzubringen, die eine ausreichende elektrische und mechanische Festigkeit für eine Außenmontage besitzen.

Ein mehrbereichiges, multisektionales Kabelkanalsystem ist beispielsweise aus der DE 41 03 708 C2 bekannt. Es handelt sich hierbei um einen Kabelkanal mit dreieckigem Querschnitt, bei dem Längsunterteilungen vorgesehen sind, in denen die einzelnen Leitungsarten untergebracht werden können. Die Teilkanäle sind bei geöffnetem Deckel frei zugänglich. Nachteilig ist, dass darin eingelegte Leitungen beim Öffnen des Kanals unkontrolliert herausfallen und das erneute Verschließen des Kanals erschweren. Ferner weist der Deckel eine Verrastung mit den Seitenwänden auf, die gleichzeitig als Scharnier dient, so dass der Deckel wahlweise um eine dieser beiden Deckelverrastungen schwenkbar ist.

In der DE 196 44 406 C1 wird ein Kabelkanalsystem beschrieben, das einen dreieckigen Querschnitt aufweist und eine Untergliederung für verschiedene Leitungsarten vorsieht. Nachteilig ist bei dieser Konstruktion, dass sie aufgrund des dreieckigen Querschnitts lediglich in Raumecken eingepasst werden kann. Zur Anbringung an einer (zentralen) Gebäudefassade zur Versorgung verschiedener Wohneinheiten ist diese Lösung denkbar ungeeignet.

Aufgabe der Erfindung ist es, ein Kabel- und Leitungsführungssystem für Energie, Daten, Luft und/oder Wasser zur Anbringung an Gebäudefassaden für die Sanierung oder den Umbau von Gebäuden anzugeben, das auf beliebige Weise modular aufgebaut werden kann und bei dem die einzelnen Leitungsarten voneinander getrennt in vorgegebenen Bereichen verlaufen.

Gelöst wird diese Aufgabe durch ein Kabel- und Leitungsführungssystem gemäß Anspruch 1.

Der erfindungsgemäße Kabel- und Leitungsführungssystems ist zur Anbringung an einer Gebäudefassade für die Sanierung oder den Umbau von Gebäuden verwendbar. Das erfindungsgemäße Kabel- und Leitungsführungssystem umfasst ein U-förmiges Unterteil, das aus einem Kanalboden und zwei Seitenwänden mit darin ausgebildeten Deckelprofilen besteht, sowie einen zum Unterteil passenden Deckel mit seitlich ausgebildeten Formprofilen, welche mit den Deckelhalteprofilen des Unterteils kooperieren, wobei das Unterteil einen ersten Kanalabschnitt zur Aufnahme von Kabel und/oder Leitungen bildet, auf dem ein weiterer Kanalabschnitt aufgesetzt werden kann. Der Boden des zweiten Kanalabschnittes bildet dabei zugleich den Deckel für den ersten Kanalabschnitt. Die Deckelhalteprofile des ersten Kanalabschnittes kooperieren mit den Formhalteprofilen des zweiten Kanalabschnittes, so dass eine feste Verbindung entsteht. Auf den zweiten Kanalabschnitt kann ein dritter Kanalabschnitt aufgerastet werden. Dadurch entstehen mehrere voneinander getrennte Bereiche für die unterschiedlichen Leitungsarten, wie Energie und Daten, Wasser und Luft. Ferner können in den einzelnen Kanalabschnitten eine oder mehrere Trennwände, senkrecht zum Kanalboden, vorgesehen sein, die den Kanal in weitere Bereiche trennt. Auf diese Weise wird eine elektrische und mechanische Trennung der einzelnen Leitungsarten gewährleistet. Durch die einzelnen Kanalabschnitte für die Leitungsarten wird dem Monteur oder dem Installateur auf der Baustelle eine vorgegebene Montagereihenfolge vorgegeben, so dass die Montage einfacher wird. Ferner hat das erfindungsgemäße Kabel- und Leitungsführungssystem auch den Vorteil, dass die Anordnung und der Verlauf der Leitungen im Kanal vorgegeben sind. Die einzelnen Leitungsarten für Energie, Daten, Wasser und/oder Luft sind in voneinander getrennten Kompartimenten angeordnet, so dass eine saubere Trennung vorgesehen ist.

In einer weiteren Ausführungsform sind die einzelnen Kanalabschnitte nicht übereinander sondern nebeneinander angeordnet.

In einer bevorzugten Ausführungsform umfasst das erfindungsgemäße Kabel- und Leitungsführungssystem Dämm- und Isoliermaterial, das um den Kanal angeordnet ist. Auf diese Weise wird eine Wärmedämmung und damit Energieeinsparung des zu sanierenden Gebäudes sichergestellt.

Der Vorteil der erfindungsgemäßen Lösung liegt darin, dass für den größten Teil der Gebäudesanierung bzw. des Gebäudeumbaus die einzelnen Wohneinheiten von innen nicht betreten werden müssen. Die einzelnen Leitungsarten für Energie und Daten, Luft und/oder Wasser werden von außen in die einzelnen Wohneinheiten geführt. Durch die gleichzeitige Isolierung und Dämmung der Gebäudefassade bleibt so die Grundsubstanz des Gebäudes erhalten, ohne dass die bestehenden Leitungen entfernt werden müssen. Durch die erfindungsgemäße Einteilung in Kanalabschnitte ist ferner eine saubere Trennung der einzelnen Leitungsarten für Energie und Daten, Luft und Wasser und damit auch eine feste Montagereihenfolge bei der Gebäudesanierung bzw. dem Gebäudeumbau festgelegt.

Die Erfindung wird in den nachfolgenden Zeichnungen näher erläutert. Es zeigen
- Fig. 1: eine isometrische Darstellung des erfindungsgemäßen Kabel- und Leitungsführungssystem mit darin integrierten Leitungen;

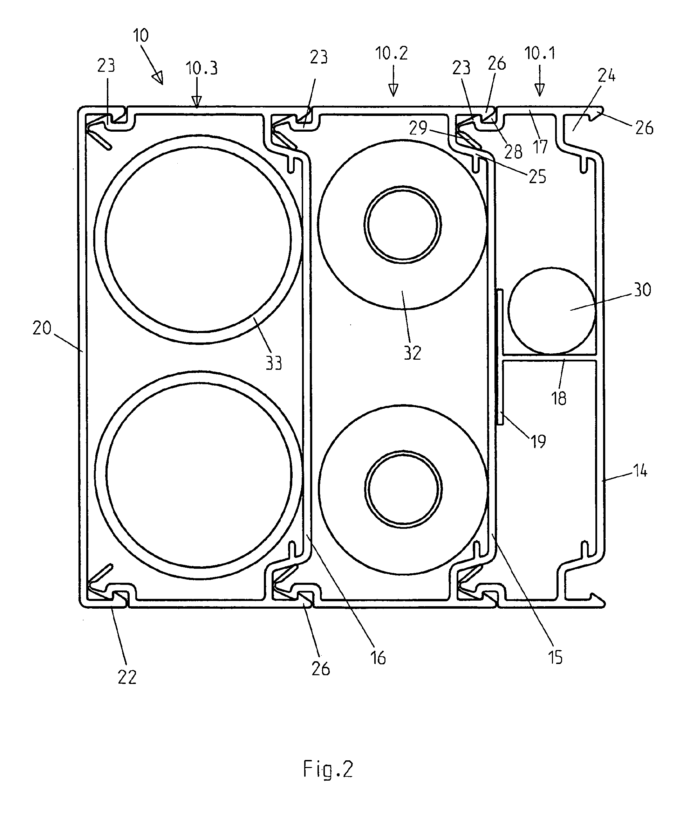

- Fig. 2: einen Querschnitt des in Fig. 1 gezeigten Kabel- und Leitungsführungssystems, und
- Fig. 3: die Verwendung des erfindungsgemäßen Kabel- und Leitungsführungssystems zur Gebäudesanierung.

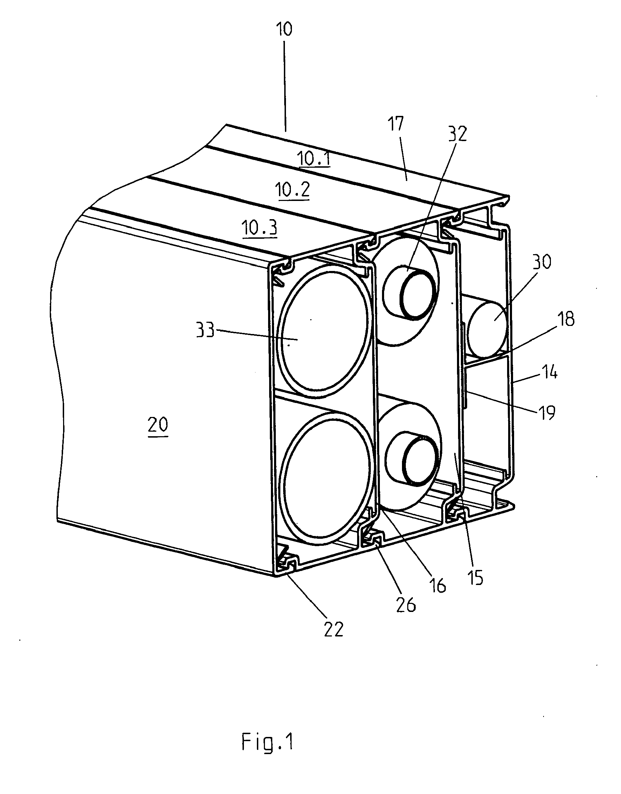

In Fig. 1 erkennt man die einzelnen Kanalabschnitte 10.1, 10.2, 10.3 des U-förmigen Unterteils 10. Das Unterteil 10 (Kanalabschnitt 10.1) besteht aus einem Kanalboden 14 und zwei seitlich etwa im rechten Winkel nach oben geneigten Seitenwänden 17. Auf den ersten Kanalabschnitt 10.1 wird ein weiterer, zweiter Kanalabschnitt 10.2 aufgesetzt. Auf diesen wird schließlich der dritte Kanalabschnitt 10.3 aufgesetzt und das Kanal- und Leitungsführungssystem mit einem Deckel 20 verschlossen.

In den einzelnen Kanalabschnitten 10.1, 10.2 und 10.3 befinden sich die Leitungen für Energie und Daten 30, Leitungen zur Wasserversorgung 32 (Heißwasser, Kaltwasser) und Leitungen zur Luftversorgung 33 (Außenluft, Raumluft). Die Leitungen für Energie und Daten 30 können in weitere Unterbereiche eingeteilt werden. Hierzu kann in den Kanalabschnitten 10.1, 10.2 oder 10.3 eine senkrecht zum Kanalboden 14, 15 oder 16 ausgebildete Trennwand 18 ausgebildet sein. Zur Verstärkung ist eine Stützleiste19 vorgesehen.

Der Kanalboden 15 des zweiten Kanalabschnitts 10.2 bildet zugleich den Deckel für den darunter liegenden ersten Kanalabschnitt 10.1. Der Kanalboden 16 des dritten Kanalabschnittes 10.3 bildet zugleich den Deckel für den zweiten Kanalabschnitt 10.2.

Die einzelnen Kanalabschnitte 10.1, 10.2 und 10.3 werden über Formhalteprofile 26 und damit kooperierenden Deckelhalteprofilen 23 zusammengehalten. In einer weiteren Ausführungsform können die einzelnen Kanalabschnitte 10.1, 10.2 oder 10.3 verklemmt, eingerastet, verschraubt, eingeclipt oder auf sonstige Weise miteinander formschlüssig verbunden werden. Dadurch wird ein sicherer Halt und mechanische Stabilität der einzelnen Kanalabschnitte 10.1, 10.2 und 10.3 für das gesamte Kabel- und Leitungsführungssystem sichergestellt.

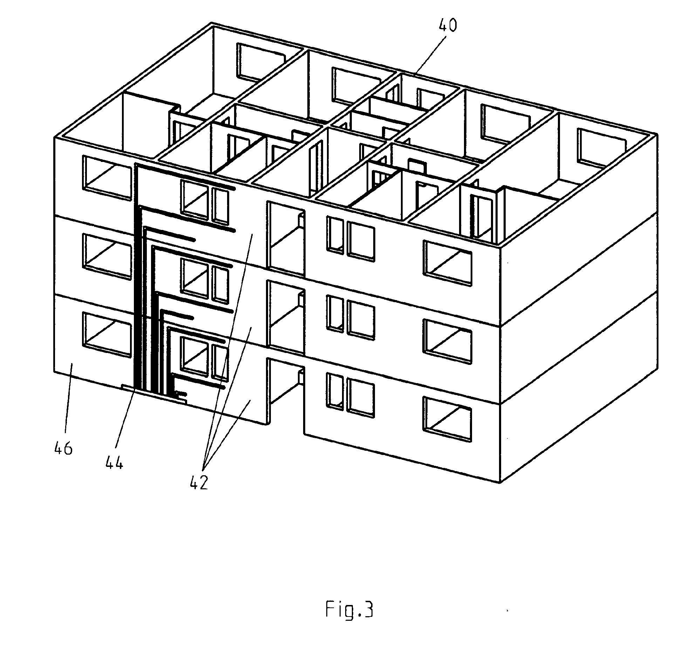

In Fig. 3 ist ein Querschnitt des erfindungsgemäßen Kabel- und Leitungsführungssystems gezeigt. Die einzelnen Kanalabschnitte 10.1, 10.2 und 10.3 werden über Formhalteprofile 26 und Deckelhalteprofile 23 miteinander verbunden. Das Formhalteprofil 26 besteht aus einem Schenkel, der zusammen mit einer oberen und seitlichen Begrenzungsfläche 25 eine offene Kammer 24 bildet. In die offene Kammer 24 greift ein Schenkel 29 des an den Seitenwänden 17 ausgebildeten Deckelhalteprofils 23. Der Schenkel 29 ist hierfür hakenförmig ausgestaltet und stützt sich gegen die Begrenzungsflächen 25 ab. Der Schenkel des Formhalteprofils 26 greift für den Verschluss in eine vom Deckelhalteprofil 23 gebildete Tasche 28. Für den Fachmann sind weitere Möglichkeiten erkennbar, wie die einzelnen Kanalabschnitte 10.1, 10.2 und 10.3 miteinander verbunden werden können, beispielsweise durch Verrastung, Halteclips und ähnliche, auf dem Gebiet bekannte Methoden.

In Fig. 3 ist schließlich die Verwendung des erfindungsgemäßen Kabel- und Leitungsführungssystems zur Anbringung an Gebäudefassaden für die Sanierung oder den Umbau von Gebäuden zu erkennen. Die einzelnen Leitungsarten 44 werden entlang der Gebäudefassade 46 des Wohngebäudes 40 zu den einzelnen Wohneinheiten 42 geführt. Nachdem die einzelnen Leitungsarten verlegt worden sind, kann das erfindungsgemäße Kabel- und Leitungsführungssystem mit Dämm- und/oder Isoliermaterial umhüllt werden.

## Patentansprüche

1. Kabel- und Leitungsführungssystem für Energie, Daten, Luft und/oder Wasser zur Anbringung an Gebäudefassaden für die Sanierung oder den Umbau von Gebäuden, umfassend:
- ein U-förmiges Unterteil (10), bestehend aus einem Kanalboden (14) und zwei etwa im rechten Winkel dazu nach oben geneigten Seitenwänden (17) mit daran ausgebildeten Deckelhalteprofilen (23),
- einen zum Unterteil (10) passenden Deckel (20) mit seitlich ausgebildeten Formprofilen (22), welche mit den Deckelhalteprofilen (23) des Unterteils (10) kooperieren, **gekennzeichnet durch** die Merkmale:
- das Unterteil (10) bildet wenigstens einen ersten Kanalabschnitt (10.1) zur Aufnahme von Kabel- und/oder Leitungen (30),
- auf oder neben den ersten Kanalabschnitt (10.1) ist wenigstens ein weiterer Kanalabschnitt (10.2) zur Aufnahme von Kabeln und/oder Leitungen (32) angeordnet, wobei der Kanalboden (15) des wenigstens zweiten Kanalabschnitts (10.2) zugleich den Deckel des ersten Kanalabschnittes (10.1) bildet und an den Seitenwänden (17) des wenigstens zweiten Kanalabschnittes (10.2) Formhalteprofile (26) ausgebildet sind, die mit den Deckelhalteprofilen (23) des ersten Kanalabschnittes (10.1) derart kooperieren, dass der erste Kanalabschnitt (10.1) und der wenigstens zweite Kanalabschnitt (10.2) zusammengehalten werden.

2. Kabel- und Leitungsführungssystem nach Anspruch 1, **gekennzeichnet durch** die Merkmale:
- auf oder neben dem zweiten Kanalabschnitt (10.2) ist ein weiterer, dritter Kanalabschnitt (10.3) zur Aufnahme von Kabel und/oder Leitungen (33) angeordnet, wobei der Kanalboden (16) des dritten Kanalabschnittes (10.3) zugleich den Deckel des zweiten Kanalabschnittes (10.2) bildet und an den Seitenwänden (17) des dritten Kanalabschnittes (10.3) Formhalteprofile (26) ausgebildet sind, welche mit den Deckelhalteprofilen (23) des zweiten Kanalabschnittes (10.2) derart kooperieren, dass der zweite Kanalabschnitt (10.2) und der erste Kanalabschnitt (10.1) zusammengehalten werden.

3. Kabel- und Leitungsführungssystem, **gekennzeichnet durch** die Merkmale:
- die Leitungen (30) sind Energie- und/oder Datenleitungen,
- die Leitungen (32) sind Wasserleitungen,
- die Leitungen (33) sind Luftleitungen.

4. Kabel- und Leitungsführungssystem nach einem der vorhergehenden Ansprüche, **gekennzeichnet durch** das Merkmal:
- am Kanalboden (14, 15, 16) eines oder mehrerer Kanalabschnitte (10.1, 10.2, 10.3) ist eine senkrecht angeordnete Trennwand (18) mit einer etwa im rechten Winkel dazu angeordneten Stützleiste (19) ausgebildet.

5. Kabel- und Leitungsführungssystem nach einem der vorhergehenden Ansprüche, **gekennzeichnet durch** die Merkmale:
- das Formhalteprofil (26) bildet eine offene Kammer (24),
- in der offenen Kammer (24) stützt sich ein Schenkel (29) des Deckelhalteprofils (23) gegen eine obere und seitliche Begrenzungsfläche (25) ab,
- der Schenkel des Formhalteprofils (26) greift in eine vom Deckelhalteprofil (23) gebildete Tasche (28).

6. Kabel- und Leitungsführungssystem nach einem der vorhergehenden Ansprüche, **gekennzeichnet durch** das Merkmal:
- die offene Kammer (24) wird von einem Schenkel des Formhalteprofils (26) und der Begrenzungsfläche (25) des Unterteils (10) gebildet.

7. Kabel- und Leitungsführungssystem nach einem der vorhergehenden Ansprüche, **gekennzeichnet durch** die Merkmale:
- das Deckelhalteprofil (23) umfasst eine Tasche (28) und einen hakenförmig ausgestalteten Schenkel (29),
- der Schenkel des Formhalteprofils (26 ) greift in die Tasche (28), und der hakenförmige Schenkel (29) des Deckelhalteprofils (23) greift in die offene Kammer (24).

8. Kabel- und Leitungsführungssystem nach einem der vorhergehenden Ansprüche, **gekennzeichnet durch** das Merkmal:
- die Kabelkanalabschnitte (10.1, 10.2, 10.3) sind von Dämm- und/oder Isoliermaterial umhüllt.

9. Kabel- und Leitungsführungssystem nach einem der vorhergehenden Ansprüche, **gekennzeichnet durch** das Merkmal:
- die Kanalabschnitte (10.1, 10.2, 10.3) sind aufeinander anclipbar, einrastbar, verschraubbar, klemmbar oder auf sonstige Weise miteinander verbunden.

10. Kabel- und Leitungsführungssystem nach einem der vorhergehenden Ansprüche, **gekennzeichnet durch** das Merkmal:
- die Kanalabschnitte (10.1, 10.2, 10.3) sind nicht aufeinander sondern nebeneinander angeordnet

11. Verwendung eines Kabel- und Leitungsführungssystems nach einem der Ansprüche 1 bis 10 zur Anbringung an die Außenfassade eines Gebäudes für die Sanierung oder den Umbau von Altgebäuden.
